# EUROPEAN PATENT SPECIFICATION

(11) **EP 2 105 008 B1**
(45) Date of publication and mention of the grant of the patent: **11.07.2012**
(21) Application number: 07859450.4
(22) Date of filing: 19.12.2007
(51) Int. Cl.: G06T 5/00, H04N 5/20, H04N 5/21, H04N 5/14

(54) **METHOD FOR IMPROVING PICTURE QUALITY**
VERFAHREN ZUR VERBESSERUNG DER BILDQUALITÄT
PROCÉDÉ POUR AMÉLIORER LA QUALITÉ D'UNE IMAGE

(30) Priority: 27.12.2006 TR 200607536
(43) Date of publication of application: 30.09.2009
(73) Proprietor: ARÇELIK A.S., 34950 Istanbul (TR)
(72) Inventor: YILMAZ, Osman, 34950 Istanbul (TR)
(74) Representative: LOUIS, PÖHLAU, LOHRENTZ
(86) International application number: PCT/IB2007/055225
(87) International publication number: WO 2008/081379

(56) References cited:
- EP-A- 0 495 431
- JP-A- 5 091 367
- OJO O A ET AL: "AN ALGORITHM FOR INTEGRATED NOISE REDUCTION AND SHARPNESS ENHANCEMENT" IEEE TRANSACTIONS ON CONSUMER ELECTRONICS, IEEE SERVICE CENTER, NEW YORK, NY, US, vol. 46, no. 3, August 2000 (2000-08), pages 474-480, XP001142869 ISSN: 0098-3063
- ATZORI L ET AL: "Post-processing for real-time quality enhancement of MPEG-coded video sequences" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, vol. 2, 30 July 2000 (2000-07-30), pages 975-978, XP010513172 ISBN: 0-7803-6536-4

## Description

Field of the Invention

The present invention relates to a method for acquiring a clearer picture in electronic visual devices.

Background of the Invention

In the state of the art, video signals received by the electronic visual devices are subject to noise reduction and sharpness control processes. The incoming video signals are passed through the noise reduction filter with the purpose of eliminating the interferences in the picture. This filter reduces the eye catching interferences in the spectrum by integrating the peaks of the signal spectrum. Thereby, the user is having the opportunity to watch a picture with less noise and interference. However, the noise reduction filter reduces sharpness when eliminating the interferences in the picture.

In addition to the noise reduction filter, the incoming video signals are also passed through the sharpness control filter. The sharpness filter increases the sharpness of the picture by amplifying the picture components which have a higher frequency than the cut-off frequency. However, this filter also increases the noise while increasing the sharpness.

The European patent application No. EP038698, within the state of the art, discloses a visual device wherein incoming video images are divided into a plurality of areas in each of which image information is sampled, and wherein the processor provides a video control signal upon adjusting the present images with the information in the images received from the memory.

The Japanese patent application No. JP2003296729, within the state of art, discloses a method for sharpening a digital image having image pixels according to its noise contents.

Summary of the Invention

The objective of the present invention is to realize a method which enables attainment of a clearer picture for electronic visuel devices.

In the method for improving picture quality realized to fulfill the objective of the present invention and defined in the first claim and the dependent claims, a third filter with spectrum analysis is used in order to maintain coordination between the noise reduction filter and sharpness control filter. This third filter determines the regions with spread spectrum and peaks in the video signal and provides information to the noise reduction filter regarding to which frequencies it should suppress and to the sharpness control filter, which frequency spectrum it should amplify.

The spectrum analyzer, the third filter used in the method, maps the spectrum in the video signal by scanning. The purpose of this is not only to prevent the noise reduction and sharpness control filters from functioning at the same region and overlapping, but also to determine in which regions the filters should be working in order to acquire the best picture.

The spectrum analyzer filter generates the spectrum of the video signal, determines the peaks and valleys in the spectrum. Additionally, it determines the bandwidth of the peaks. In case the proportion of the amplitude of the peak to the bandwidth thereof exceeds a certain value established in the design stage, this region is determined as a noise region and the activity of the noise filter is increased while the activity of the sharpness filter is restricted.

Detailed Description of the Invention

The method for improving picture quality realized to fulfill the objectives of the present invention is illustrated in the accompanying figures, in which;

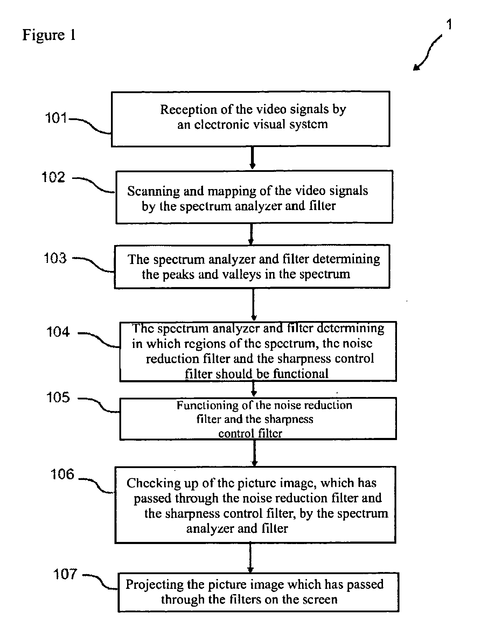

Figure 1 is the flow chart of the inventive method for improving picture quality.

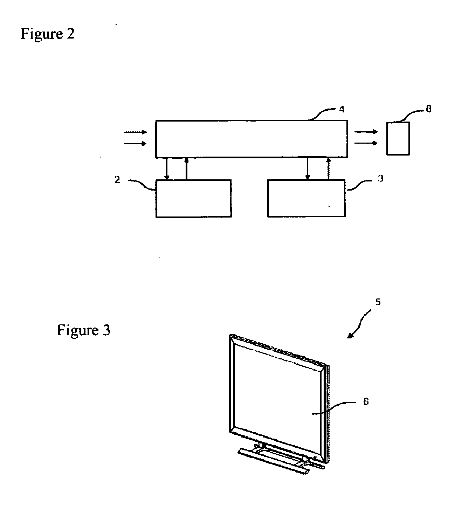

Figure 2 is the schematic view of the filters.

Figure 3 is the schematic view of the electronic visual device.

The parts in the figures are numbered individually where the numbers refer to the following:

1. Method

2. Noise reduction filter

3. Sharpness control filter

4. Spectrum analyzer and filter

5. Device

6. Screen

The inventive method for improving picture quality (1) comprises the steps of

- reception of the video signals by the electronic visual system (5)(101),

- scanning and mapping of the video signals by the spectrum analyzer and filter (4) (102),

- the spectrum analyzer and filter (4) determining the peaks and valleys in the spectrum (103),

- the spectrum analyzer and filter (4) determining in which regions of the spectrum, the noise reduction filter (2) and the sharpness control filter (3) should be functional (104),

- operating of the noise reduction filter (2) and the sharpness control filter (3) (105)

- checking up of the picture image, which has passed through the noise reduction filter (2) and the sharpness control filter (3), by the spectrum analyzer and filter (4) (106),

- displaying the picture image which has passed through the filters (2, 3 and 4) on the screen (6) (107)

The video signals received by the electronic visual device (5) are scanned via the spectrum analyzer and filter (4) within the device (5). The spectrum on the signal is mapped and the amplitude and radial frequency of the spectrum is determined at each point. The spectrum analyzer and filter (4) locates on which points there are valleys and peaks on the spectrum, by determining the amplitude - radial frequency graphics of the spectrum regions. The spectrum analyzer and filter (4) determines the bandwidth of the peaks. In case the proportion of the amplitude of the peak to the bandwidth thereof exceeds a certain value established in the design stage, this region will be determined as a noise region and the activity of the noise filter (2) is increased while the activity of the sharpness filter (3) is restricted.

Consequently, before the signal enters the noise reduction filter (2) and sharpness control filter (3) according to the structure of the incoming video signal, the spectrum analyzer and filter (4) coordinates the two filters (2 and 3) by determining in which regions of the spectrum these filters (2 and 3) should be functional.

The noise reduction filter (2) performs filtering at the regions determined on the spectrum in accordance with the warnings coming from the spectrum analyzer and filter (4). The noise reduction filter (2) performs this filtering mathematically by integrating the peaks in the spectrum and reduces the interferences.

The sharpness control filter (3) increases the sharpness by amplifying the picture image components having higher frequencies than the cut off frequency. The points where sharpness needs to be increased are determined by the spectrum analyzer and filter (4) and reported to the sharpness control filter (3). The sharpness control filter (3) increases the sharpness by performing filtering at the determined region.

By means of the inventive method (1), overlapping of the functional regions of the noise reduction filter (2) and the sharpness control filter (3) is prevented. The method (1) is not only based on the fact that in regions where only the noise reduction filter (2) is functional the sharpness control filter (3) does not function, and it works in accordance with the principle of determining in which regions should the two filters (2 and 3) be functional upon scanning the first coming spectrum.

Within the scope of this basic concept, development of various embodiments of the inventive method (1) is possible, and the invention is essentially according to the claims, it cannot be limited with the examples described herein.

## Claims

1. A method for improving picture quality (1) comprising the steps of
- reception of video signals by an electronic visual system (5)(101),
- scanning and mapping of the video signals by a spectrum analyzer and filter (4) (102), thereby providing points for which a radio frequency and an amplitude is determined, the spectrum analyzer and filter (4) determining the peaks and valleys in the spectrum (103), and determining the bandwidth of the peaks,
- the spectrum analyzer and filter (4) determining a first region of the spectrum for a noise reduction filter (2) and a second region in the spectrum above a cut-off frequency for a sharpness control filter (3), wherein the spectrum analyzer and filter (4) specifies a region of the spectrum as first region if the proportion of the amplitude of the peak to the bandwidth thereof exceeds a certain value, and wherein the first and the second spectral regions are not overlapping,
- the noise reduction filter (2) filtering at the first region by integrating the peaks in the first region of the spectrum and reducing the interferences,
- the sharpness control filter (3) filtering at the second region by amplifying those picture image components at points which have frequencies in said region above said cut-off frequency,
- displaying the image which has passed through the filters (2, 3 and 4) on the screen (6), (107).

## Patentansprüche

1. Verfahren zum Verbessern der Bildqualität (1), folgende Schritte umfassend:
- Empfangen der Videosignale durch ein elektronisches visuelles System (5) (101),
- Abtasten und Zuordnen der Videosignale durch einen Spektrumsanalysator und Filter (4) (102), wodurch Punkte bereitgestellt werden, für die eine Funkfrequenz und eine Amplitude bestimmt werden, wobei der Spektrumsanalysator und Filter (4) die Spitzen und Täler im Spektrum bestimmt (103) und die Bandbreite der Spitzen bestimmt,
- wobei der Spektrumsanalysator und Filter (4) eine erste Region des Spektrums für einen Rauschunterdrückungsfilter (2) und eine zweite Region im Spektrum über einer Grenzfrequenz für einen Schärfenregelungsfilter (3) bestimmt, wobei der Spektrumsanalysator und Filter (4) eine Region des Spektrums als erste Region bestimmt, wenn das Verhältnis der Amplitude der Spitze zur Bandbreite derselben einen bestimmten Wert übersteigt, und wobei die erste und zweite Spektralregion einander nicht überlagern,
- wobei der Rauschunterdrückungsfilter (2) an der ersten Region durch Integrieren der Spitzen in der ersten Region des Spektrums und durch Reduzieren von Interferenzen filtert,
- wobei der Schärfenregelungsfilter (3) an der zweiten Region durch Verstärken derjenigen Bildkomponenten an Punkten filtert, die in der Region Frequenzen oberhalb der Grenzfrequenz aufweisen,
- Anzeigen des Bildes, das durch die Filter (2, 3 und 4) getreten ist, auf dem Bildschirm (6) (107).

## Revendications

1. Un procédé pour améliorer la qualité d'image (1) comprenant les étapes de
- recevoir des signaux vidéo par un système électronique visuel (5) (101),
- balayer et faire une projection des signaux vidéo par un analyseur et filtre de spectre (4) (102), donc tout en fournissant des points pour lesquels une fréquence radio et une amplitude sont déterminées, l'analyseur et filtre de spectre (4) déterminant des pics et creux du spectre (103), et déterminant la largeur de bande des pics,
- l'analyseur et filtre de spectre (4) déterminant une première région du spectre pour un filtre de réduction de bruit (2) et une deuxième région dans le spectre au-dessus d'une fréquence de coupure pour un filtre de réglage de netteté (3), où l'analyseur et filtre de spectre (4) spécifie une région du spectre comme la première région si le rapport de la amplitude du pic à la largeur de bande de celui-ci dépasse une certaine valeur, et où les première et deuxième régions spectrales ne se chevauchent pas,
- le filtre de réduction de bruit (2) filtrant à la première région en intégrant les pics dans la première région du spectre et en réduisant les interférences,
- le filtre de réglage de netteté (3) filtrant à la deuxième région en amplifiant ces composantes d'image aux points qui ont des fréquences dans ladite région au-dessus de ladite fréquence de coupure,
- afficher l'image qui a passé à travers les filtres (2, 3 et 4) sur l'écran (6), (107).
